# EUROPEAN PATENT SPECIFICATION

(11) **EP 4 631 760 B1**
(45) Date of publication and mention of the grant of the patent: **28.10.2026**
(21) Application number: 24169798.6
(22) Date of filing: 11.04.2024
(51) Int. Cl.: B60K 28/06, B60W 40/08

(54) **A SYSTEM FOR DETERMINING INTOXICATION OF A USER OF A VEHICLE**
SYSTEM ZUR BESTIMMUNG DER VERGIFTUNG EINES BENUTZERS EINES FAHRZEUGS
SYSTÈME DE DÉTERMINATION D'INTOXICATION D'UN UTILISATEUR D'UN VÉHICULE

(43) Date of publication of application: 15.10.2025
(73) Proprietor: Aptiv Technologies AG, 8200 Schaffhausen (CH)
(72) Inventor: BARTH, Alexander, 8200 Schaffhausen (CH); REHFELD, Timo, 8200 Schaffhausen (CH); HAHN, Lukas, 8200 Schaffhausen (CH)
(74) Representative: Lewis Silkin LLP

(56) References cited:
- EP-A1- 2 743 117
- US-A1- 2015 257 681
- US-A1- 2021 403 052
- US-A1- 2023 142 517

## Description

### Introduction

The present invention relates to a system for determining intoxication of a user of a vehicle, and a method of determining intoxication of a user of a vehicle.

### Background

Drugs and alcohol cause detrimental effects to a driver's cognitive function and motor skills, including impaired judgment, coordination, and reaction times. As such, the issue of driving under the influence of drugs or alcohol poses significant risks to public safety, resulting in numerous vehicle collisions, injuries, and fatalities worldwide. Despite stringent laws and awareness campaigns, intoxicated driving remains a prevalent problem.

Vehicle system manufacturers have attempted to address this problem by including various sensors within the vehicle to determine if the driver of the vehicle is intoxicated. For example, some vehicle manufacturers offer an in-vehicle breathalyser system that the driver can use to voluntarily check their breath alcohol content before driving. More stringent measures have been implemented in the United States of America, where drivers that have been convicted of intoxicated driving may be required to install an ignition interlock device in their vehicle. Such a device only allows the vehicle to start after the driver has used a breathalyser, which detects if the alcohol level is below the legal threshold. However, while such systems can accurately determine if a person is intoxicated, they do not guarantee that the actual driver has used the system (i.e., a third party could have breathed into the breathalyser) and, thus, can be easily bypassed.

Recently, vehicle system manufacturers have attempted to determine if a driver is intoxicated by testing the driver's cognitive and motor skill prior to driving. For example, US 2021/0291650 A1 discloses a test system for detecting impairment aboard a motor vehicle including an electronic control unit (ECU) with a plurality of sensors. The sensors are positioned within a vehicle interior, and include at least a touch screen and a microphone, and possibly an eye-tracking camera. In response to receiving a start request indicative of a requested start event of the motor vehicle, the ECU executes instructions to initiate a cognitive response test via the sensors. The ECU determines a test score of a driver during the test while the motor vehicle remains off, compares the test score to baseline scores to determine a passing or failing test result, and executes a control action aboard the motor vehicle in response to the passing or failing test result. The ECU may disable or immobilise the motor vehicle in response to the failing test result. However, adding additional intoxication sensors to determine if a driver can operate the car prior to start of a journey is expensive and requires additional equipment with limited use for the end-user despite fulfilling the intoxication sensing task. Importantly, it is considered disadvantageous that the driver must actively execute such tests prior to driving the vehicle. Examples of prior patent publications in the field include: US2021403052, US2023142517, EP2743117 and US2015257681.

In view of the above, there is a need to provide an improved method and system for intoxication detection that does not rely on the driver actively performing intoxication tests prior to driving. Furthermore, it is a beneficial aim to leverage sensing means that are already available in a vehicle, i.e., as part of an existing driver monitoring system, and thus avoiding the need for additional intoxication-specific sensing equipment to be provided.

### Summary

Accordingly, it is a general object of the invention to provide a method and system for automatically determining the intoxication status of a user of a vehicle by utilising existing sensors within a vehicle and leveraging data collecting from these sensors to more accurately determine if the driver is intoxicated.

In a broad aspect, a system for determining intoxication of a user of a vehicle is disclosed according to claim 1. The system comprising: at least one vehicle input for capturing data; and a controller configured for, automatically and/or prior to a user initiated operation of the vehicle: receiving the data; determining a user characteristic from the received data; comparing the user characteristic to a stored user characteristic; and determining an intoxication status.

In this way, a user behaviour or characteristic can be determined by the controller and proactively monitored by the available vehicle sensor devices prior to a user-initiated function (such as actively requesting a sobriety test or trying to start the vehicle). In other words, a state of intoxication can be assessed without active participation of the user/driver. Intoxication assessment may continue after the user is operating the vehicle. For example, if the effect of alcohol or narcotics had not yet manifested in the user at the time the vehicle was first used, it is still possible to provide useful feedback to improve safety. Intoxication, in the context of the invention, could be interpreted as any form of impairment, such as a head injury.

In one form, the at least one vehicle input comprises at least one vehicle exterior input and/or at least one vehicle interior input. In this way, it is possible to determine different, or the same, user characteristics based on the exterior and interior inputs. As such, the system can analyse various user characteristics, both before and after entering the vehicle, to determine potential intoxication of the user. If the same characteristic is detected by both external and internal sensors, it can be tracked and updated, improving the system's accuracy in identifying intoxication.

In one form, there are a plurality of vehicle inputs and determining an intoxication status comprises determining an intoxication score for each one of the vehicle inputs. In this way, an intoxication score can be determined for each one of the vehicle inputs separately. This enables the system to assess each individual vehicle input in isolation and indicate outliers between the results.

In one form, the intoxication score for each of the vehicle inputs is assigned a weight according to a predetermined reliability of the vehicle input for predicting intoxication. In this way, the intoxication scores that result in a more accurate determination that the user is intoxicated have a higher weight than those that are less accurate. As such, by factoring in the accuracy of the determined user characteristics, the system can provide a more accurate indication of whether the user is intoxicated.

In one form, determining the intoxication status comprises comparing the intoxication score with a stored threshold value. In this way, the system can determine if the user is intoxicated by comparing the determined intoxication score against a saved threshold score. The threshold score being established by prior testing on intoxicated and non-intoxicated users. As such, the system is able to determine is intoxicated based on these prior tests.

In one form, the system comprises a display, and the controller is further configured for: outputting the user intoxication status on the display. In this way, the determined intoxication status can be displayed to the user. That is, if the system determines that the user is intoxicated, the system may output a message that alerts the user that they cannot drive the vehicle as they are intoxicated. As such, the user is deterred from driving the vehicle.

According to the invention, the controller is configured for retrieving a stored user profile comprising the stored user characteristic, wherein the user profile is updated based on the determined user characteristics to reduce the number of false positive results. As the user profile is continuously updated, the accuracy of determining if the user is intoxicated increases.

In one form, the at least one vehicle exterior or interior input comprises at least one sensor. In this way, both the interior and exterior of the vehicle can be monitored by the system.

In one form, the at least one sensor comprises a camera, and wherein the determined user characteristic is at least one of: pose, gait, motion, gesture, facial expression, seatbelt use, and an object detected with user. In this way, a plurality of user characteristics can be determined from the same camera. These determined characteristics are used in determining if the user is intoxicated.

In one form, the at least one input is configured to capture a user characteristic selected from at least one of: biometric or vital sign of the user, seat belt operation, interaction with an infotainment system, foot placement. In this way, a plurality of user characteristics can be determined from the same camera. These determined characteristics are used in determining if the user is intoxicated.

According to a second aspect of the present invention, a vehicle incorporating the aforementioned system is disclosed according to claim 11. The vehicle incorporating the aforementioned system, wherein the at least one vehicle input is provided by a device utilised by other driver monitoring functions of the vehicle. In this way, existing vehicle inputs can be used by the system, i.e., vehicle inputs part of an existing driver monitoring system, and thus avoids the need for additional intoxication-specific sensing equipment to be provided in the vehicle.

According to a third aspect of the present invention, a method for determining intoxication of a user of a vehicle is disclosed according to claim 12.

In this way, a user behaviour or characteristic can be determined by the controller and proactively monitored by the available vehicle sensor devices prior to a user-initiated function (such as actively requesting a sobriety test or trying to start the vehicle). In other words, a state of intoxication can be assessed without active participation of the user/driver. Intoxication assessment may continue after the user is operating the vehicle. For example, if the effect of alcohol or narcotics had not yet manifested in the user at the time the vehicle was first used, it is still possible to provide useful feedback to improve safety.

In one form, the present and stored user characteristic is derived according to at least one of: pose, gait, motion, gesture, facial expression, seatbelt use, an object carried by user, biometric or vital sign of the user, seat belt operation, interaction with an infotainment system, foot placement. In this way, a plurality of user characteristics can be determined that can all be used in determining if the user of the vehicle is intoxicated.

In one form, there are a plurality of user characteristics and each is assigned a weight according to a predetermined reliability of the characteristic for predicting intoxication, and the combined/weighted user characteristics determine the intoxication status. In this way, the intoxication scores that result in a more accurate determination that the user is intoxicated have a higher weight than those that are less accurate. As such, by factoring in the accuracy of the determined user characteristics, the system can provide a more accurate indication of whether the user is intoxicated.

According to a fourth aspect of the present invention, a non-transitory computer readable medium including instructions, which when executed by one or more processors, implement the aforementioned method.

The present disclosure also describes a method for determining an intoxication status of a user of a vehicle. The method may comprise: receiving exterior data from at least one exterior input of the vehicle; and/or receiving interior data from at least one interior input of the vehicle; and processing same to analyse the data to obtain user behaviour and/or characteristic data. The analysed data (exterior and/or interior) may then be compared to stored user behaviour/characteristic data. The comparative result is used for determining an intoxication status (which may be separated into an exterior and/or interior intoxication status and weighted dependent on historical accuracy of the behaviour/characteristic types) and, if intoxication is determined, ultimately taking some form of action, e.g., report, alert and/or immobilisation.

In this way, a user behaviour or characteristic can be proactively monitored by available vehicle sensor devices prior to a user-initiated function (such as actively requesting a sobriety test or trying to start the vehicle). In other words, a state of intoxication can be assessed without active participation of the user/driver. Intoxication assessment may continue after the user is operating the vehicle. For example, if the effect of alcohol or narcotics had not yet manifested in the user at the time the vehicle was first used, it is still possible to provide useful feedback to improve safety.

### Brief Description of Drawings

Illustrative embodiments will now be described with reference to the accompanying drawings in which:

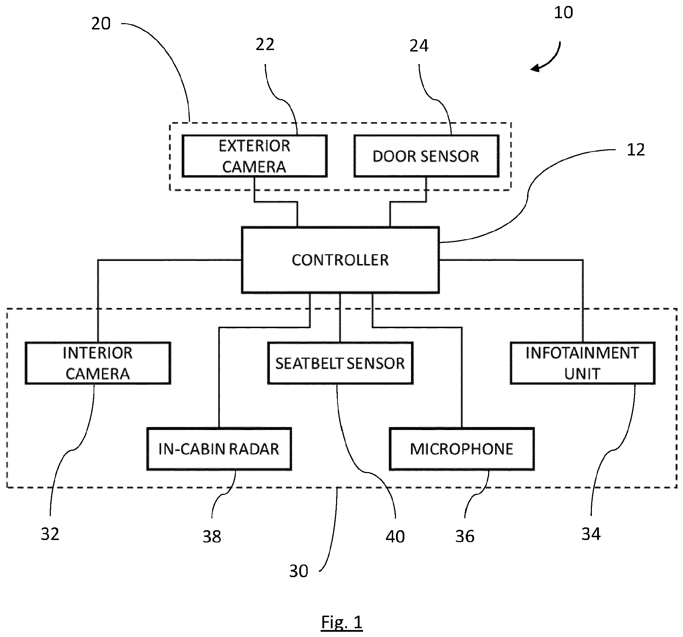

Figure 1 illustrates a block diagram of one implementation of a system according to the invention.

### Detailed Description

The following description presents exemplary embodiments and, together with the drawings, serves to explain principles of the invention. However, the scope of the invention is not intended to be limited to the precise details of the embodiments or exact adherence with all system features and/or method steps, since variations will be apparent to a skilled person and are deemed also to be covered by the description. Terms for components used herein should be given a broad interpretation that also encompasses equivalent functions and features.

In some cases, several alternative terms (synonyms) for structural and/or system features have been provided but such terms are not intended to be exhaustive. Descriptive terms should also be given the broadest possible interpretation; e.g., the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Any directional terms such as "forward", "backward", "vertical", "horizontal", "up", "down", "sideways", "upper" and "lower" are used for convenience of explanation usually with reference to the form shown in illustrations and are not intended to be ultimately limiting if an equivalent function can be achieved with an alternative dimension and/or direction. All directional terms are relative to each other.

The description herein refers to embodiments with particular combinations of steps or features, however, it is envisaged that further combinations and crosscombinations of compatible steps or features between embodiments will be possible. Indeed, isolated features may function independently as an invention from other features and not necessarily require implementation as a complete combination.

It will be understood that the illustrated embodiments show applications only for the purposes of explanation. In practice, the invention may be applied to many different configurations, where the embodiment is straightforward for those skilled in the art to implement.

Figure 1 shows an exemplary system 10 for processing vehicle input data associated with a user of a vehicle. The vehicle input data shows the user behaviour of the user of the vehicle. In this example, the system comprises a plurality of vehicle inputs. The vehicle inputs include inputs from at least one exterior input, e.g., denoted as a group 20, and at least one interior input, e.g., denoted as a group 30. It will be noted that there are seven inputs shown in Figure 1, however there may be any number of exterior 20 and/or interior 30 inputs in the system 10. Moreover, the vehicle may comprise only exterior inputs 20 or only interior inputs 30 depending on the configuration of the vehicle and the sensors available within the vehicle.

The system also comprises a controller 12, or electronic control unit (ECU), which receives the inputs from the external input 20 and the interior input 30. The controller 12 receives data from the inputs and processes this data to determine if the user of the vehicle is intoxication, which will be explained in more detail hereinafter.

In one example, the exterior input 20 includes an input from an exterior vehicle camera 22, such as a camera used in a surround view camera system of the vehicle. The exterior vehicle camera 22 can be configured for object detection so that the user of the vehicle can be detected prior to entry. In one example, the exterior vehicle camera 22 utilised facial recognition to determine if the detected person is an authorised user of the vehicle and not a pedestrian walking by the vehicle.

In this example, once a user has been detected by the exterior vehicle camera 22, the controller 12 receives the data from the exterior vehicle camera 22 and performs gait analysis on the received data. That is, the controller 12 identifies and tracks body landmarks (i.e., distinctive features) received from the exterior vehicle camera 22 by pose landmark detection. In one example, the controller 10 analyses the direction that the user approaches the vehicle to determine if the user walks directly to the vehicle (i.e., in a straight line) or if the walking path of the user is irregular (i.e., the user stumbles towards the vehicle) which may indicate intoxication.

In addition, the controller 12 can process the data received from the exterior vehicle camera 22 to identify facial landmarks/features of the user. Facial landmarks can be used to determine facial expressions of the user as they approach the vehicle. For example, people who are intoxicated may have difficulty controlling their facial expressions, which can lead to them becoming exaggerated or overly animated. In other examples, people who are intoxicated may lose all facial expression and appear blank or emotionless.

Furthermore, the controller 12 can process the data received from the exterior vehicle camera 22 using object detection to identify objects on the exterior of the vehicle. For example, the user could be carrying an alcoholic beverage as they approach the vehicle. As such, the system 10 can detect the alcoholic beverage and use information for determining if the user is intoxicated. In addition, the controller 12 can process the data received from the exterior vehicle camera 22 using activity detection to identify the activity of the user (e.g., drinking, smoking, etc.).

The exterior input 20 can also comprise a door handle sensor 24, which can be used to detect alcohol on the hands of the user of the vehicle. In addition, the handle sensor 24 can be configured to detect various vital signs (e.g., heart rate, perspiration) of the user as they enter the vehicle. Moreover, the door sensor 24 can be used to detect/log the number of attempts at opening the door of the vehicle.

Accordingly, as outlined in the example(s) above, the controller 12 receives the inputs from the exterior inputs 20 and is configured to process the user behaviour of the user prior to entry into the vehicle. Based on the user behaviour data, the controller 12 is configured to calculate an overall exterior intoxication status. That is, the controller 12 processes the data received from the exterior vehicle inputs and analyses the data to determine if the user of the vehicle is intoxicated. For example, if the controller 12 detects unusual user behaviour from the exterior camera 22, the controller 12 can output an intoxication status associated with the user of the vehicle. The intoxication status can either be a binary (or discrete) indication of whether the user is intoxicated or not intoxicated, or it can be a percentage indicative of the likelihood of intoxication (i.e., a likelihood of intoxication score). If a likelihood of intoxication score is used, this determined score is compared against a threshold value stored in the controller 12 that indicates if the user is intoxicated. The threshold value being set after general testing with different participants during development. For example, a likelihood of intoxication score may have to be above 80 percent for the system 10 to determine that the user is intoxicated. Alternatively, the controller 12 may determine an individual likelihood of intoxication score for each one of the vehicle exterior inputs that is subsequently combined, either by averaging the score or by combining the individual scores using a weighting system that is based on the significance of that vehicle exterior input, to determine an overall likelihood of intoxication score.

In one example, either independent from or in combination with the example above, the interior input 30 includes an input from an interior cabin camera 32 that is configured to detect the user, or driver, once they are within the vehicle. The interior cabin camera 32 can be a camera located within the vehicle facing into the cabin of the vehicle. The interior cabin camera 32 is positioned in the cabin to maximise the detected area within the cabin. In one example, multiple interior cabin cameras 32 can be located within the cabin of the vehicle to ensure that all possible areas within the cabin are detected by the cameras 32.

In accordance with this example, the controller 12 can process the data received from the interior vehicle camera(s) 32 to identify facial landmarks/features of the user. Facial landmarks can be used to determine facial expressions of the user within the vehicle, either before or during a driving operation of the vehicle. Facial landmarks can be defined as specific points on a user's face that serve as key reference locations for various facial analysis tasks, these landmarks typically include features such as the corners of the eyes, the tip of the nose, the edges of the mouth, and the contours of the user's face. By accurately detecting and tracking these facial landmarks in images or video frames received from the interior vehicle camera 32, facial recognition systems, emotions analysis algorithms, and/or other computer vision applications may be implemented by the controller 12 to identify and analyse facial expressions, gestures, and user characteristics (i.e., as an indicator of user behaviour). These detected facial expressions, gestures, and user characteristics of the user within the vehicle can be processed by the controller 12 to determine if the user is intoxicated.

In addition, the controller 12 can process the data received from the interior vehicle camera 32 to measure, for example, the user's eye movements, eye-gaze direction (or gaze detection), eye-closure amount, blinking movements, head movements, etc. For example, gaze detection is used to determine where the user is looking. Gaze detection involves analysing images or video footage of a user's face from the interior vehicle camera 32 by the controller 12. The controller 12 is configured to track the position and movement of the user eyes, and then calculate the direction of the user gaze. By accurately estimating where a person is looking, it enables more natural and intuitive interactions with devices or systems, enhances user experience, and can be used for safety-critical applications such as monitoring driver attention while driving. Gaze detection also involves determining the gaze vector, which represents the direction of the user gaze in a three-dimensional space, which is crucial for determining the user gaze by the controller 12. As such, the controller 12 can determine, or estimate, the physiological and behavioural states of the user using this information.

The controller 12 can process data received from the interior vehicle camera 32 and perform pose/landmark detection to identify body landmarks of the user and/or movement. In this way, the controller 12 identifies and tracks the user body landmarks while they are within the vehicle, so that it is possible to detect the presence, position, and movement of a user inside the vehicle. For example, it is possible to detect the movements of the user as they enter the vehicle, how the user inserts the key into the ignition of the vehicle, how they press the 'START' button in the vehicle, and how the user fastens their seatbelt to determine if the user is intoxicated. In other words, making a qualitative and/or quantitative judgement of the manner or ease with which these tasks are performed, which may include the time taken.

In an alternative or additional example, the interior vehicle input can comprise an input 34 from the vehicle infotainment unit. The vehicle infotainment unit is a computer system integrated into the vehicle's dashboard that combines information and entertainment functionalities. The controller 12 receives the input 34 from the vehicle infotainment unit 34 that indicates how the user interacted with the vehicle infotainment unit 34. For example, the input data 34 from the vehicle infotainment unit can comprise the number of miss-clicks of the touch screen, or how/the manner in which the physical vehicle control dials are adjusted, of the vehicle infotainment unit. Intoxicated users may take several attempts to select an option in the vehicle infotainment unit and/or may operate the vehicle infotainment unit in an erratic manner. By detecting and analysing the interaction between the user and the vehicle infotainment unit it can be possible to determine if the user is intoxicated.

The interior vehicle input can alternatively or additionally comprise an interior microphone 36 that detects the voice of the user and any additional noises within the interior of the vehicle. Preferably, as with other sensor elements described herein, the system 10 may utilise an existing microphone within the interior, or cabin, of the vehicle so that no additional microphone is required. As an intoxicated user may utter indistinct sounds, murmur, or slur one's words, these sounds can all be detected by the interior microphone 36 and processed by the controller 12. In one example, the vehicle can be configured to receive voice controls that allow a user to control the function of the vehicle (e.g., call a contact, initiate navigation to a destination, etc.) by voice commands. The controller 12 can receive the voice commands detected the interior microphone 36 and process the voice commands to determine if the user is intoxicated, e.g., by comparison to a prior established baseline. In addition, the interior microphone 36 can detect sounds within the vehicle, such as singing, bottles clinking, and indistinct sounds emitted by the user which are processed by the controller 12 as an indication of whether the user is intoxicated; e.g., as a component of an intoxication value/score.

The interior vehicle input may, alternatively or in addition, comprise an input from an in-cabin radar 38 positioned within the vehicle 12. In-cabin radar 38 can detect the presence, position, and movement of a user inside the vehicle. For example, the in-cabin radar 38 can be located near to pedals of the vehicle to monitor the placement of the user's feet on the pedals. The in-cabin radar 38 can be used in combination with, or in place of, the interior cameras 32 to provide accurate detection of the presence, position, and movement of a user inside the vehicle. In addition, the in-cabin radar 38 can detect and measure the vital signs (e.g., temperature, heart rate, breathing rate, etc.) of the user of the vehicle.

The internal inputs 30, e.g., from the interior vehicle camera 32, input 34 from the vehicle infotainment unit, and/or the in-cabin radar 38 can be used together to detect and monitor the hand position of the user while they interact with the vehicle infotainment unit. Hand gesture recognition involves identifying and interpreting specific movements and configurations of a user hand or fingers to understand gestures and commands. Gesture detection relies on detecting key points or landmarks/features on the hand, such as the fingertips, knuckles, and palm, through image or sensor data received from the vehicle interior inputs by the controller 12. The controller 12 can be configured to track these landmarks and analyse their special relationship and patterns of motion. As such, it is possible to monitor the position and movement of the user fingers and hands as a means to measure/determine if the user is intoxicated. That is, intoxicated users are known to suffer from a loss of coordination which may result in the user taking several attempts at, for example, selecting an option in the vehicle infotainment unit.

In one example, as an alternative or in addition to one or more of the foregoing examples, the interior vehicle input comprises an input from a seatbelt sensor 40. The seatbelt sensor 40 can be positioned in, or near to, the seatbelt receiver to detect successful or unsuccessful attempts by the user at fastening the seatbelt. An intoxicated driver may take several attempts to fasten the seatbelt, which can be detected and transmitted by the seatbelt sensor 40 to the controller 12 for processing, e.g., as part of an aggregate intoxication score or similar measure.

In one example, as an alternative or in addition to one or more of the foregoing examples, the interior vehicle input comprises an input from a steering wheel sensor 40. The steering wheel sensor can be positioned on, or integrated into, the steering wheel of the vehicle. The steering wheel sensor configured to output vital signs of the user, the user's hand position, steering movements by the user to the controller 12, e.g., as part of an aggregate intoxication score or similar measure. Notably, any of the sensing means specified herein may provide a component of a determination of intoxication.

Accordingly, the controller 12 is configured to receive one or more inputs from the at least one exterior input 20 and one or more inputs from the at least one interior input 30 and process the user behaviour data to determine an intoxication status. An exterior intoxication status may be an indication of the intoxication status of the user from the vehicle exterior inputs, while an interior intoxication status may be an indication of the intoxication status of the user from the vehicle interior inputs. The intoxication status of the user can be determined by using the exterior intoxication status and interior intoxication status in isolation or in combination. For example, if the determined exterior intoxication status is that the user is intoxicated, the system may only use the result of the exterior intoxication status to determine the intoxication status. In this example, the exterior intoxication status is determined prior to the user entering the vehicle. As such, vehicle functions may be prohibited by the controller or vehicle as a result of this determination. In another example, if the determined exterior intoxication status is not indicative of the user being intoxicated, the system may only use the determined interior intoxication status in combination with the determined exterior intoxication status to determine the intoxication status of the user. In another example, if the determined exterior intoxication status is not indicative of the user being intoxicated, the system may only use the determined interior intoxication status to determine the intoxication status of the user.

In one example, if the controller 12 detects unusual user behaviour from the interior camera 32 (through analysis of any of the interior vehicle inputs as described above), the controller 12 can output an interior intoxication status associated with the user of the vehicle. The intoxication status can either be a binary (or discrete) indication of whether the user is intoxicated or not intoxicated, or it can be a percentage indicative of the likelihood/probability of intoxication (i.e., a likelihood of intoxication score). If a probability of intoxication score is used, this determined score may be compared against a threshold value stored in the controller 12 that indicates if the user is intoxicated. For example, a likelihood of intoxication score may have to be above 80 percent for the system 10 to determine that the user is intoxicated. In such a case the vehicle may be immobilised. Alternatively, the controller 12 may determine an individual likelihood of intoxication score for each one of the vehicle exterior inputs that is subsequently combined, either by averaging the score or by combining the individual scores using a weighting system that is based on the significance of that vehicle exterior input, to determine an overall likelihood of intoxication score. In other words, a weighting may be applied to each and any of the external and/or internal inputs according to a predetermined reliability of that measurement for indicating intoxication.

Each of the exterior and interior vehicle inputs can be considered to be individual submodules which are processed by the controller 12. Each submodule may generate a likelihood of intoxication score for several output classes, which are accumulated in a fusion module by the controller 12. In one example, the fusion module may output one of two discrete output classes: intoxicated or not intoxicated. In another example, the fusion module may output multiple discrete intermediate levels of intoxication, e.g., not intoxicated, lightly intoxicated, strongly intoxicated. In another example, the fusion module may output a continuous numeric value on a given scale, e.g., 0 indicating that the user is not intoxicated, and 100 indicating that the user is very intoxicated. In this example, a numeric value can be assigned to indicate when the intoxication level of user is above the legal limit of driving the vehicle and, as such, is intoxicated. In addition, the numeric score output by the fusion module may also be indicative of blood alcohol level of the user. The fusion module can be obtained by training a machine learning model directly on inputs from the sensors of the vehicle. For example, the machine learning model can be trained by a learning based model that takes the individual likelihoods as an input and outputs a combined likelihood for the above output classes. The machine learning methods include, for example, neural networks, decision trees, SVM, or similar.

The submodules may represent different algorithms to process the sensor data of one or more vehicle sensors. For each output class, the likelihood of intoxication for each of the individual submodules can be accumulated independently. In one example, as mentioned, the likelihood of intoxication is further weighted by some *a priori* likelihood of the individual submodule (e.g., to control the influence of a given submodule on the fusion result). In another example, the fusion output is defined as the class with the maximum accumulated likelihood score. Alternatively, the fusion output can be set to unknown if the difference in the accumulated likelihood of intoxication score between the maximum accumulated likelihood score and the second highest accumulated likelihood score is below a configurable threshold.

Based on the vehicle exterior input or vehicle interior input, the controller 12 may determine a discrete value (e.g., discrete output class) that is linked to a specific probability for intoxicated and non-intoxicated. It may be appreciated that not all of the discrete output classes carry the same weight for determining if the user is intoxicated and, as such, these output classes are weighted based on their predetermined/known accuracy in determining the likelihood of the user being intoxicated. The likelihoods can be obtained manually based on model knowledge or, preferably, derived statistically from a set of training data. Examples of where a discrete value is used may include: body pose detection/classification, facial expression detection, activity detection, seatbelt detection.

Based on the vehicle exterior input or vehicle interior input, the controller 12 may determine a likelihood of intoxication score (continuous output variable) that is mapped to a specific likelihood via a continuous mapping function for intoxicated and non-intoxicated. The output variables can be multi-dimensional vectors. Examples of where a likelihood of intoxication score is used may include: velocity of/time taken for entering the car, and the deviation/movements of key body points.

Based on the vehicle exterior inputs or vehicle interior inputs, the controller 12 may utilise a machine learning model to determine if the user is intoxicated. The machine learning model may be trained on data received from the vehicle exterior inputs or vehicle interior inputs, e.g., in a controlled environment where a user is intoxicated or, particularly not intoxicated (i.e. a baseline behaviour characteristic). From this machine learning model, the data received by the controller 12 can be input into the trained machine learning model that directly outputs a likelihood/probability score for intoxicated or non-intoxicated. The controller 12 can store the trained machine learning model or is connected to an external component which stores the trained machine learning model. Examples of where a trained machine learning model is used may include: trajectories of key body points, e.g., hands and/or facial landmarks, and voice data.

In one example, the system 10 comprises a user or driver profile which may continuously update based on the vehicle inputs. The user profile may comprise a set of threshold values that are specific to a user/driver of the vehicle. That is, the behaviour of the user may be monitored continuously for deviation from stored data associated with each one of the various vehicle inputs in the user profile. In some cases, the system 10 could incorrectly identify that the user is intoxicated due to the differences detected by the system 10, but by updating the user profile with specific user behaviours, the system 10 can learn user behaviour of an individual and, as such, the system 10 can adapt to user behaviour of the user of the vehicle to more accurately determine if said user is intoxicated. In some cases, the system 10 may implement a learning phase in which user behaviour data may be accumulated without determining if the user is intoxicated to create or build the user profile. Once sufficient user behaviour data has been collected, the user profile is created. Subsequently, the system 10 may continuously update this user profile based on the vehicle inputs (i.e., once the user profile has been created after the learning phase is complete) and determine if the user is intoxicated. Based on the created user profile during the learning phase, the system 10 may more accurately determine is the user is intoxicated and avoid false positive detections, as the user profile can be created based on the specific behaviour of the user during the learning phase.

The system can be configured to determine, for a certain period of time or number of rides by the same user, that the user is driving while not intoxicated. As such, reference data associated with the user's behaviour can be collected in an unsupervised manner. The reference data is stored and analysed by the system to adapt system parameters, e.g., thresholds or weights in the fusion model, for intoxication. Once the stored data contains sufficiently consistent data, i.e., intoxication results are consistently the same, the system starts to detect deviations from the model to identify abnormal user behaviour that could be linked to intoxication of the user. In the same way, a long-term drift can be corrected, for example, in case the user gets older which results in some behavioural patterns of the user changing, such as when entering or operating the car that are not related to intoxication.

Once an intoxication status, or a probability score, has been determined, the result may be output on the display of the vehicle infotainment unit. For example, if the system 10 determines that the user is intoxicated, the display may issue a warning (e.g., visual alert) to the driver indicating that they should not drive the vehicle. Alternatively, if the system 10 cannot determine if the user is intoxicated, the system 10 may output a cautionary message to the driver that indicates that they may or may not be able to safely drive the vehicle. If the system determines that the user is not intoxicated, the system 10 can either output a message indicating that they are safe to drive or output no message. In a case where the driver is determined to have a high probability of intoxication, the vehicle may be immobilised.

In the case where the driver is determined to have a high probability of intoxication, the vehicle may be immobilised such that the vehicle's engine does not turn on. Alternatively, the engine of the vehicle may start, but the vehicle is prohibited from moving by, for example, the braking system. In another example, the vehicle's transmission system may be immobilised such that the user is unable to change or go above a certain gear. In these scenarios, climate controls and other functions powered by the vehicle can still be initiated so that the user can remain within the vehicle until their intoxication score reduces sufficiently (i.e., until the system 10 determines that they can drive the vehicle). This ensures that the user can remain in the vehicle while they are intoxicated. In other examples, the vehicle may allow operation of the vehicle but can restrict or limit certain parameters of travel, such as the maximum travel distance, maximum speed of the vehicle, and may grant permission to the user to allow for the vehicle to be moved (e.g., move the vehicle out of a dangerous situation, as determined by the vehicle).

The invention as described above can be implemented entirely or in part in a vehicle. Further, a method for achieving the invention, comprising carrying out the steps of the controller 12 can also be implemented as part of the invention. Further still, the method may be implemented as computer program code stored on a non-transitory computer readable medium which would cause a processor or controller to carry out the method according to the invention.

In view of the above, a system and method for determining the intoxication status of a user of a vehicle can be achieved via passive monitoring (i.e., without conscious interaction by a user) through several vehicle inputs. Ironically, the system may alternatively be considered proactive in the sense that it uses available sensors of the vehicle to enable an automatic and non-user activated determination of an intoxication status. Advantageously, the system and method utilises existing inputs within a vehicle to reduce the cost of such a system, and also does not require the user to actively perform a test prior to driving the vehicle.

## Claims

1. A system (10) for determining intoxication of a user of a vehicle, comprising:
at least one vehicle input (20, 30) for capturing data;
and
a controller (12) configured for, automatically and/or prior to a user initiated operation of the vehicle:
receiving the data;
determining a user characteristic from the received data;
retrieving a stored user profile comprising a stored user characteristic corresponding to the determined user characteristic;
comparing the determined user characteristic to the stored user characteristic;
wherein the user profile is updated based on the determined user characteristic; and
determining an intoxication status.

2. The system according to claim 1, wherein the at least one vehicle input comprises at least one vehicle exterior input (20) and/or at least one vehicle interior input (30).

3. The system according to claim 2, wherein there are a plurality of vehicle inputs (22, 24, 32, 38, 40, 36, 34) and determining an intoxication status comprises determining an intoxication score for each one of the vehicle inputs.

4. The system according to claims 3, wherein the plurality of vehicle inputs comprise at least one exterior input (20) and at least one interior input (30), and wherein determining the intoxication status comprises determining an exterior intoxication status from the data received from the at least one exterior input prior to user entry into the vehicle, and an interior intoxication status from the data received from the at least one interior input, the intoxication status determined from the determined exterior intoxication status and/or interior intoxication status.

5. The system according to claim 3 or 4, wherein the intoxication score for each of the vehicle inputs is assigned a weight according to a predetermined reliability of the vehicle input for predicting intoxication.

6. The system according to any of claims 3 to 5, wherein determining an intoxication status comprises comparing the intoxication score with a stored threshold value.

7. The system according to any preceding claim, wherein the system comprises a display, and the controller (12) is further configured for:
outputting the user intoxication status on the display.

8. The system according to any one of claims 2 to 7, wherein the at least one vehicle exterior (20) or interior input (30) comprises at least one sensor.

9. The system according to claim 8, wherein the at least one sensor comprises a camera (22, 32), and wherein the determined user characteristic is at least one of: pose, gait, motion, gesture, facial expression, seatbelt use and an object detected with user.

10. The system according to any preceding claim, wherein the at least one input is configured to capture a user characteristic selected from at least one of: biometric or vital sign of the user, seat belt operation, interaction with an infotainment system, foot placement.

11. A vehicle incorporating the system of any of the preceding claims, wherein the at least one vehicle input (20, 30) is provided by a device utilised by other driver monitoring functions of the vehicle.

12. A method for determining intoxication of a user of a vehicle, comprising:
capturing data from at least one sensor that is external (20) and/or internal (30) to the vehicle;
at a time prior to a user-initiated operation of the vehicle,
determine a present user characteristic from the captured data;
retrieve a stored user profile comprising a stored user characteristic corresponding to the determined present user characteristic;
comparing the present user characteristic to the stored user characteristic;
wherein the user profile is pupdated based on the determined present user characteristic; and
determining an intoxication status.

13. The method according to claim 12, wherein the present and stored user characteristic is derived according to at least one of: pose, gait, motion, gesture, facial expression, seatbelt use, an object carried by user, biometric or vital sign of the user, seat belt operation, interaction with an infotainment system, foot placement.

14. A non-transitory computer readable medium including instructions, which when executed by one or more processors, implement a method according to any one of claims 12 or 13.

## Patentansprüche

1. System (10) zum Bestimmen einer Intoxikation eines Fahrzeugnutzers, umfassend:
mindestens eine Fahrzeugeingabeeinheit (20, 30) zum Erfassen von Daten;
und
eine Steuereinheit (12) die automatisch und/oder bevor ein Nutzer das Fahrzeug in Betrieb setzt konfiguriert ist für:
Empfangen von Daten;
Bestimmen einer Nutzereigenschaft aus den empfangenen Daten;
Abrufen eines gespeicherten Nutzerprofils, das eine gespeicherte Nutzereigenschaft umfasst, die der bestimmten Nutzereigenschaft entspricht;
Vergleichen der bestimmten Nutzereigenschaften mit der gespeicherten Nutzereigenschaft;
wobei das Nutzerprofil basierend auf der bestimmten Nutzereigenschaft aktualisiert wird; und
Bestimmen eines Intoxikationszustands.

2. System nach Anspruch 1, wobei der mindestens eine Fahrzeugeingang mindestens einen fahrzeugexternen Eingang (20) und/oder mindestens einen fahrzeuginternen Eingang (30) umfasst.

3. System nach Anspruch 2, wobei eine Vielzahl von Fahrzeugeingängen (22, 24, 32, 38, 40, 36, 34) vorhanden ist und das Bestimmen eines Intoxikationszustands das Bestimmen eines Intoxikationswerts für jeden der Fahrzeugeingänge umfasst.

4. System nach Anspruch 3, wobei die Vielzahl von Fahrzeugeingängen mindestens einen externen Eingang (20) und mindestens einen internen Eingang (30) umfasst, und wobei das Bestimmen des Intoxikationszustands das Bestimmen eines externen Intoxikationszustands anhand der von dem mindestens einen externen Eingang empfangenen Daten vor dem Einsteigen des Nutzers in das Fahrzeug und eines internen Intoxikationszustands anhand der von dem mindestens einen internen Eingang empfangenen Daten umfasst, wobei der Intoxikationszustand aus dem bestimmten externen Intoxikationszustand und/oder dem bestimmten internen Intoxikationszustand bestimmt wird.

5. System nach Anspruch 3 oder 4, wobei dem Intoxikationswert für jeden der Fahrzeugeingänge entsprechend einer vorbestimmten Zuverlässigkeit des Fahrzeugeingangs für das Vorhersagen einer Intoxikation eine Gewichtung zugewiesen wird.

6. System nach einem der Ansprüche 3 bis 5, wobei das Bestimmen eines Intoxikationszustands das Vergleichen des Intoxikationswerts mit einem gespeicherten Schwellenwert umfasst.

7. System nach einem der vorhergehenden Ansprüche, wobei das System eine Anzeige umfasst und die Steuereinheit (12) ferner konfiguriert ist für:
Ausgeben des Intoxikationszustands des Nutzers auf dem Display.

8. System nach einem der Ansprüche 2 bis 7, wobei der mindestens eine fahrzeugexterne Eingang (20) oder fahrzeuginterne Eingang (30) mindestens einen Sensor umfasst.

9. System nach Anspruch 8, wobei der mindestens eine Sensor eine Kamera (22, 32) umfasst und wobei die bestimmte Nutzereigenschaft mindestens eines von Folgendem ist: Körperhaltung, Gangbild, Bewegung, Geste, Gesichtsausdruck, Verwendung eines Sicherheitsgurts und ein zusammen mit dem Nutzer erfasstes Objekt.

10. System nach einem der vorhergehenden Ansprüche, wobei der mindestens eine Eingang so konfiguriert ist, dass er eine Nutzereigenschaft erfasst, die aus mindestens einem aus Folgendem ausgewählt ist: biometrisches Merkmal oder Vitalparameter des Nutzers, Benutzung des Sicherheitsgurts, Interaktion mit einem Infotainmentsystem, Fußposition.

11. Fahrzeug, das das System nach einem der vorhergehenden Ansprüche umfasst, wobei der mindestens eine Fahrzeugeingang (20, 30) von einer Vorrichtung bereitgestellt wird, die von anderen Fahrerüberwachungsfunktionen des Fahrzeugs genutzt wird.

12. Verfahren zum Bestimmen einer Intoxikation eines Fahrzeugnutzers, umfassend:
Erfassen von Daten von mindestens einem Sensor, der fahrzeugextern (20) und/oder fahrzeugintern (30) angeordnet ist;
zu einem Zeitpunkt vor einer vom Nutzer eingeleiteten Nutzung des Fahrzeugs,
Bestimmen einer aktuellen Nutzereigenschaft aus den erfassten Daten;
Abrufen eines gespeicherten Nutzerprofils, das eine gespeicherte Nutzereigenschaft umfasst, die der bestimmten aktuellen Nutzereigenschaft entspricht;
Vergleichen der aktuellen Nutzereigenschaft mit der gespeicherten Nutzereigenschaft;
wobei das Nutzerprofil basierend auf der bestimmten aktuellen Nutzereigenschaft aktualisiert wird; und
Bestimmen eines Intoxikationszustands.

13. Verfahren nach Anspruch 12, wobei die aktuelle und gespeicherte Nutzereigenschaft abgeleitet ist aus mindestens einem aus: Körperhaltung, Gangbild, Bewegung, Geste, Gesichtsausdruck, Verwendung eines Sicherheitsgurts, ein vom Benutzer mitgeführtes Objekt, biometrisches Merkmal oder Vitalparameter des Nutzers, Benutzung des Sicherheitsgurts, Interaktion mit einem Infotainmentsystem, Fußposition.

14. Nichtflüchtiges computerlesbares Medium, das Anweisungen einschließt, die bei Ausführung durch einen oder mehrere Prozessoren ein Verfahren nach einem der Ansprüche 12 oder 13 implementieren.

## Revendications

1. Système (10) destiné à déterminer une intoxication d'un utilisateur d'un véhicule, comprenant :
au moins une entrée de véhicule (20, 30) destinée à la capture des données ;
et
un dispositif de commande (12) conçu pour, automatiquement et/ou précédant une mise en œuvre du véhicule initiée par l'utilisateur :
recevoir les données d'imagerie ;
déterminer une caractéristique d'utilisateur à partir des données reçues ;
récupérer un profil d'utilisateur mémorisé comprenant une caractéristique d'utilisateur mémorisée correspondant à la caractéristique d'utilisateur déterminée ;
comparer la caractéristique utilisateur déterminée avec la caractéristique d'utilisateur mémorisée ;
dans lequel le profil d'utilisateur est mis à jour sur la base de la caractéristique d'utilisateur déterminée ; et
déterminer un état d'intoxication.

2. Système selon la revendication 1, dans lequel ladite au moins une entrée de véhicule comprend au moins une entrée extérieure de véhicule (20) et/ou au moins une entrée intérieure de véhicule (30).

3. Système selon la revendication 2, dans lequel il existe une pluralité d'entrées de véhicule (22, 24, 32, 38, 40, 36, 34) et la détermination d'une intoxication déterminant un état d'intoxication comprend la détermination d'un score d'intoxication pour chacune des entrées du véhicule.

4. Système selon la revendication 3, dans lequel la pluralité d'entrées de véhicule comprend au moins une entrée extérieure (20) et au moins une entrée intérieure (30), et dans lequel la détermination de l'état d'intoxication comprend la détermination d'un état d'intoxication extérieure à partir des données reçues provenant des données reçues provenant de ladite au moins une entrée extérieure précédant l'entrée de l'utilisateur dans le véhicule et un état d'intoxication intérieure à partir des données reçues provenant de ladite au moins une entrée intérieure, l'état d'intoxication est déterminé à partir de l'état d'intoxication extérieure déterminé et/ou de l'état d'intoxication intérieure.

5. Système selon la revendication 3 ou 4, dans lequel le score d'intoxication pour chacune des entrées de véhicule est affecté d'un poids selon une fiabilité prédéfinie de l'entrée de véhicule pour prédire l'intoxication.

6. Système selon l'une quelconque des revendications 3 à 5, dans lequel la détermination d'un état d'intoxication comprend la comparaison du score d'intoxication avec une valeur de seuil mémorisée.

7. Système selon une quelconque revendication précédente, dans lequel le système comprend un écran et le dispositif de commande (12) est conçu en outre pour :
afficher l'état d'intoxication de l'utilisateur sur l'écran.

8. Système selon l'une quelconque des revendications 2 à 7, dans lequel ladite au moins une entrée extérieure (20) ou intérieure (30) du véhicule comprend au moins un capteur.

9. Système selon la revendication 8, dans lequel ledit au moins un capteur comprend une caméra (22, 32), et dans lequel la caractéristique d'utilisateur déterminée est au moins un élément parmi : la posture, la démarche, le mouvement, le geste, l'expression faciale, le port de la ceinture de sécurité et la détection d'un objet avec l'utilisateur.

10. Système selon une quelconque revendication précédente, dans lequel ladite au moins une entrée est conçue pour capturer une caractéristique d'utilisateur sélectionnée dans au moins un élément parmi : un signe biométrique ou vital de l'utilisateur, le fonctionnement de la ceinture de sécurité, l'interaction avec un système d'infodivertissement et le placement des pieds.

11. Véhicule incorporant le système selon l'une quelconque des revendications précédentes, dans lequel ladite au moins une entrée de véhicule (20, 30) est fournie par un dispositif utilisé par d'autres fonctions de surveillance du conducteur du véhicule.

12. Procédé destiné à déterminer une intoxication d'un utilisateur d'un véhicule, comprenant :
la capture des données provenant d'au moins un capteur externe (20) et/ou interne (30) au véhicule ;
à un moment précédant la mise en œuvre du véhicule initiée par l'utilisateur,
la détermination d'une caractéristique d'utilisateur présente à partir des données capturées ;
la récupération d'un profil d'utilisateur mémorisé comprenant une caractéristique d'utilisateur mémorisée correspondant à la caractéristique d'utilisateur présente déterminée ;
la comparaison de la caractéristique d'utilisateur présente avec la caractéristique d'utilisateur mémorisée ;
dans lequel le profil d'utilisateur est mis à jour sur la base de la caractéristique d'utilisateur présente déterminée ; et
la détermination d'un état d'intoxication.

13. Procédé selon la revendication 12, dans lequel la caractéristique d'utilisateur présente et mémorisée est dérivée selon au moins un élément parmi : la posture, la démarche, le mouvement, le geste, l'expression faciale, le port de la ceinture de sécurité, un objet porté par l'utilisateur, un signe biométrique ou vital de l'utilisateur, le fonctionnement de la ceinture de sécurité, l'interaction avec un système d'infodivertissement, le placement des pieds.

14. Support lisible par ordinateur non transitoire comportant des instructions, qui lorsqu'elles sont exécutées par un ou plusieurs processeurs, mettent en œuvre un procédé selon l'une quelconque des revendications 12 ou 13.
